# EUROPÄISCHE PATENTSCHRIFT

(11) **EP 1 452 424 B1**
(45) Veröffentlichungstag und Bekanntmachung des Hinweises auf die Patenterteilung: **13.02.2008**
(21) Anmeldenummer: 04003920.8
(22) Anmeldetag: 20.02.2004
(51) Int. Cl.: B62D 25/20, B62D 21/06

(54) **Karosserie**
Vehicle body
Carosserie

(30) Priorität: 01.03.2003 DE 10309002
(43) Veröffentlichungstag der Anmeldung: 01.09.2004
(73) Patentinhaber: ADAM OPEL AG, 65423 Rüsselsheim (DE)
(72) Erfinder: Bechtold, Ralf-Dieter, 55278 Weinolsheim (DE); Wanke, Thomas, 55239 Gau-Odernheim (DE)

(56) Entgegenhaltungen:
- AT-B- 135 494
- DE-A- 4 205 891
- DE-C- 490 459

## Beschreibung

Die Erfindung betrifft eine Karosserie für ein mehrere hintereinander angeordnete Sitzreihen aufweisendes Kraftfahrzeug gemäß dem Oberbegriff des Anspruches 1.

Eine Karosserie ist in der DE (A) 42 05 891 dargestellt. Sie weist zwei parallel verlaufende vordere Längsträger auf, die an der Vorderfront des Fahrzeuges enden. An ihren rückwärtigen Enden gabeln sich die Längsträger in jeweils zwei parallel verlaufende U-förmige Streben, die sich unter den als Bodenblech ausgeführten Karosserieboden erstrecken und dort mit diesem verschweißt sind, wobei ihre offenen Seiten an dem Karosserieboden anliegen.

Eine gattungsgemäße Karosserie ist aus der AT 135 494 B bekannt.

In der Regel sind auf dem Bodenblech mehrere quer zur vorgesehenen Fahrtrichtung weisende Querträger angeordnet. Über diese Querträger werden Gurtlasten von hinteren Sitzreihen in einen Hinterrahmen geleitet. Die Querträger verhindern gleichzeitig ein Aufwölben des Unterbodens. Eine mittlere Sitzreihe hat beispielsweise eine biegesteife Bank, welche auf seitlichen Schwellern gelagert ist, oder auf Sitzschienen geführte Einzelsitze. Zur Aufnahme der Kräfte der Sitzbefestigung sowie eines Käfigs für ein Ersatzrad oder zur Halterung einer Auspuffanlage werden an dem Unterboden Verstärkungsbleche angeordnet.

Nachteilig bei der bekannten Karosserie ist, dass die Aufnahme der Verformungsenergie bei einem Heckaufprall im mittleren Bereich der Karosserie nur unzureichend ist. Weiterhin führt die große Anzahl von Verstärkungsblechen zu einem hohen Fertigungsaufwand.

Der Erfindung liegt das Problem zugrunde, eine Karosserie der eingangs genannten Art so zu gestalten, dass sie einen hohen Schutz bei einem Heckaufprall bietet.

Dieses Problem wird durch eine Karosserie gemäß Anspruch 1 gelöst.

Durch diese Gestaltung werden bei einem Heckaufprall Kräfte in den gabelförmigen Träger und von diesem vorzugsweise großflächig in den Unterboden eingeleitet. Damit wird verhindert, dass die hinteren Sitzreihen bei einem Heckaufprall zusammengeschoben werden. Dank der Erfindung hat der Unterboden durch den gabelförmigen Träger einen mittleren Lastpfad zur Aufnahme von Verformungsenergie. Hierdurch wird der Bereich der mittleren und hinteren Sitzreihe besonders steif gehalten und damit eine Knautschzone eingegrenzt. Hierdurch bietet die erfindungsgemäße Kraftfahrzeugkarosserie einen hohen Schutz bei einem Heckaufprall. Die erfindungsgemäße Karosserie hat zudem eine hohe Steifigkeit im Bereich eines hinter der hinteren Sitzreihe angeordneten Laderaums und eine hohe Steifigkeit im Bereich der Sitzbefestigungen der mittleren und hinteren Sitzreihe. Der Unterboden ist durch den gabelförmigen Träger gegenüber Vertikallasten durch einen Passagier und gegenüber Querlasten beispielsweise durch Kurvenfahrt besonders steif ausgebildet. Weitere Verstärkungsbleche für die einzelnen Sitzreihen sind dank der Erfindung nicht erforderlich. Weiterhin können die Auspuffanlage sowie ein Käfig für ein Ersatzrad ohne Einsatz von weiteren Verstärkungen unmittelbar an dem gabelförmigen Träger montiert werden. Hierdurch ist die erfindungsgemäße Kraftfahrzeugkarosserie besonders einfach aufgebaut und lässt sich dadurch besonders kostengünstig fertigen.

Bei einem Crash des Kraftfahrzeuges lassen sich gemäß einer vorteilhaften Weiterbildung der Erfindung auf die Streben des gabelförmigen Trägers einwirkende Biegemomente einfach vermeiden, wenn die zwei Streben des gabelförmigen Trägers parallel zueinander angeordnet sind und über einen V-förmigen Abschnitt in die einzelne Strebe übergehen. Hierdurch ist der gabelförmige Träger im Wesentlichen Y-förmig gestaltet.

Zur weiteren Verringerung der Fertigungskosten der erfindungsgemäßen Kraftfahrzeugkarosserie trägt es bei, wenn der gabelförmige Träger einstückig aus Blech gefertigt ist.

Die Befestigung des gabelförmigen Trägers an dem Unterboden gestaltet sich gemäß einer anderen vorteilhaften Weiterbildung der Erfindung besonders einfach, wenn der gabelförmige Träger einen Flansch aufweist und von der Unterseite her an einem Bodenblech des Unterbodens befestigt ist. Der Flansch lässt sich hierdurch einfach mit dem Bodenblech verschweißen. Hierdurch wird die Verformungsenergie bei einem Heckkaufprall großflächig in den Unterboden eingeleitet und dessen Verformung besonders gering gehalten. Weiterhin ist der gabelförmige Träger hierdurch beispielsweise zur Montage der Auspuffanlage einfach von der Unterseite des Kraftfahrzeuges her zugänglich.

Bei einem Heckaufprall des Kraftfahrzeuges werden die Kräfte gemäß einer anderen vorteilhaften Weiterbildung der Erfindung ohne Belastung der Sitzreihen in den Unterboden eingeleitet, wenn der gabelförmige Träger an einer Rückwand der Karosserie befestigt ist.

Zur weiteren Versteifung der erfindungsgemäßen Kraftfahrzeugkarosserie im Bereich der hinteren Sitzreihen trägt es bei, wenn ein im Bereich einer Hinterachse angeordneter Querträger den V-förmigen Abschnitt des gabelförmigen Trägers übergreift. Zudem lässt sich hierdurch der gabelförmige Träger von dem Querträger abstützen. Dies führt zu einer starken Verringerung der Verformung des Bodens und einer Sitzvorverlagerung.

Zur weiteren Erhöhung der Stabilität im Bereich der mittleren Sitzreihe trägt es gemäß einer anderen vorteilhaften Weiterbildung der Erfindung bei, wenn die parallelen Streben des gabelförmigen Trägers bis zu einem weiteren Querträger geführt sind.

Zur weiteren Vereinfachung der Montage der erfindungsgemäßen Karosserie trägt es bei, wenn die zwei parallelen Streben und/oder die einzelne Strebe Befestigungsmittel für Sitzschienen und/oder Gurthalterungen für eine zweite und eine dritte Sitzreihe oder hintereinander angeordneten Einzelsitze aufweisen.

Die Erfindung lässt verschiedene Ausführungsformen zu. Zur weiteren Verdeutlichung ihres Grundprinzips ist eine davon in der Zeichnung dargestellt und wird nachfolgend beschrieben. Die Zeichnung zeigt in
- Fig. 1: eine perspektivische Darstellung eines hinteren Bereichs einer erfindungsgemäßen Karosserie,
- Fig. 2: eine Ansicht von oben auf einen gabelförmigen Träger der erfindungsgemäßen Karosserie aus Figur 1

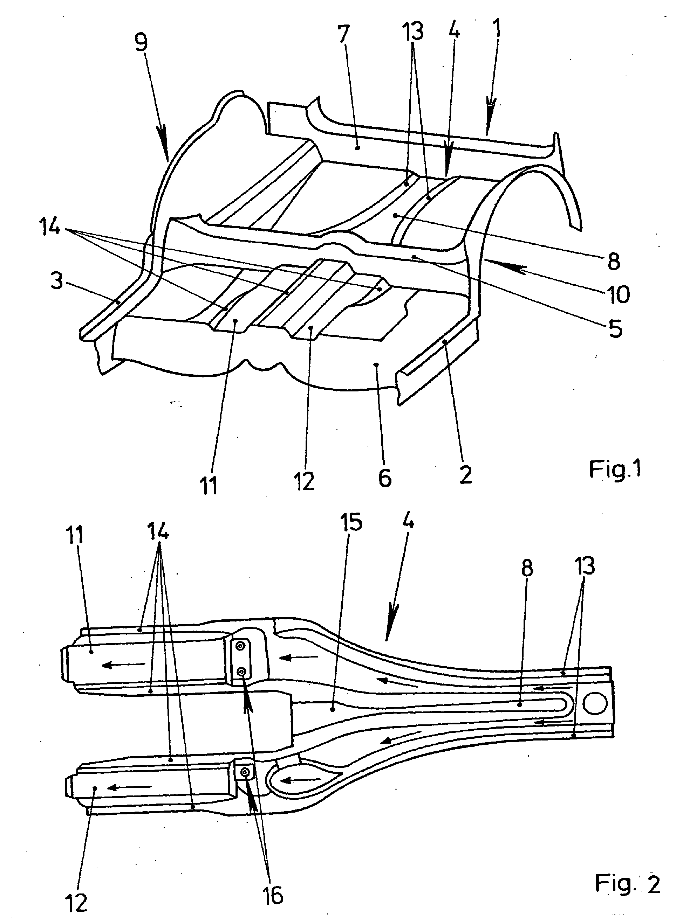

Figur 1 zeigt perspektivisch einen Unterboden 1 einer Karosserie eines Kraftfahrzeuges mit seitlichen Längsträgern 2, 3 und einem mittig angeordneten gabelförmigen Träger 4. Die Längsträger 2, 3 sind über zwei Querträger 5, 6 miteinander verbunden. An dem rückseitigen Ende der Karosserie ist eine Rückwand 7 angeordnet. Der gabelförmige Träger 4 weist zwischen einem der Querträger 5 und der Rückwand 7 eine einzelne Strebe 8 auf. In diesem Bereich hat die Karosserie Radläufe 9, 10 für nicht dargestellte Hinterräder des Kraftfahrzeuges. Die beiden Querträger 5, 6 sind über zwei parallel zueinander angeordnete Streben 11, 12 des gabelförmigen Trägers 4 miteinander verbunden. Die Streben 8, 11, 12 weisen jeweils Flansche 13, 14 zur Verschweißung mit angrenzenden Bauteilen der Karosserie auf. Zur Vereinfachung der Zeichnung ist ein mit den Flanschen 13, 14 des gabelförmigen Trägers 4 zu verschweißendes Bodenblech nicht dargestellt.

Figur 2 zeigt den gabelförmigen Träger 4 der Karosserie aus Figur 1 vor der Montage in einer Ansicht von oben. Hierbei lässt sich erkennen, dass der gabelförmige Träger 4 einstückig gefertigt ist und in seinem von der einzelnen Strebe 8 auf die beiden parallel zueinander angeordneten Streben 11, 12 einen V-förmigen Abschnitt 15 aufweist. Diese Gestaltung führt bei einem Heckaufprall des Kraftfahrzeuges zu einer gleichmäßigen Einleitung von Verformungsenergie in die Karosserie durch den mittleren Bereich des in Figur 1 dargestellten Unterbodens 1. Zur Verdeutlichung sind in Figur 2 sogenannte Lastpfade mit Pfeilen gekennzeichnet. Nicht dargestellte Sitzschienen einer hinteren und einer mittleren Sitzreihe des Kraftfahrzeuges lassen sich auf den Streben 8, 11, 12 des gabelförmigen Trägers 4 befestigen. Hierfür sind auf den beiden parallelen Streben 11, 12 des gabelförmigen Trägers 4 Schweißmuttern 16 angeordnet. Selbstverständlich lässt sich der gabelförmige Träger 4 zudem mit nicht dargestellten Halterungen für eine Auspuffanlage oder für weitere Bauteile des Kraftfahrzeuges zu einer baulichen Einheit vormontieren.

### Bezugszeichenliste

- 1: Unterboden
- 2, 3: Längsträger
- 4: gabelförmiger Träger
- 5, 6: Querträger
- 7: Rückwand
- 8: Strebe
- 9, 10: Radlauf
- 11, 12: Strebe
- 13, 14: Flansch
- 15: V-förmiger Abschnitt
- 16: Schweißmutter

## Patentansprüche

1. Karosserie für ein mehrere hintereinander angeordnete Sitzreihen aufweisendes Kraftfahrzeug mit einem Unterboden und mit an dem Unterboden angeordneten Verstärkungsteilen zur Halterung von Sitzen des Kraftfahrzeuges und mit einem sich längs erstreckenden gabelförmigen Träger (4), wobei der Unterboden (1) in seinem mittleren Bereich den gabelförmigen Träger (4) aufweist, dass der gabelförmige Träger (4) mit einer einzelnen Strebe (8) in Richtung eines rückseitigen Endes des Unterbodens (1) weisend und mit zwei Streben (11, 12) von dem rückseitigen Ende des Unterbodens (1) wegweisend angeordnet ist und **dadurch gekennzeichnet, dass** die einzelne Strebe (8) zwischen einer an dem rückseitigen Ende der Karosserie angeordneten Rückwand (7) und einem Querträger (5) angeordnet ist.

2. Karosserie nach Anspruch 1, **dadurch gekennzeichnet, dass** die zwei Streben (11, 12) des gabelförmigen Trägers (4) parallel zueinander angeordnet sind und über einen V-förmigen Abschnitt (15) in die einzelne Strebe (8) übergehen.

3. Karosserie nach Anspruch 1 oder 2, **dadurch gekennzeichnet, dass** der gabelförmige Träger (4) einstückig aus Blech gefertigt ist.

4. Karosserie nach zumindest einem der vorhergehenden Ansprüche, **dadurch gekennzeichnet, dass** der gabelförmige Träger (4) einen Flansch (13, 14) aufweist und von der Unterseite her an einem Bodenblech des Unterbodens (1) befestigt ist.

5. Karosserie nach zumindest einem der vorhergehenden Ansprüche, **dadurch gekennzeichnet, dass** der gabelförmige Träger (4) an einer Rückwand (7) der Karosserie befestigt ist.

6. Karosserie nach zumindest einem der vorhergehenden Ansprüche, **dadurch gekennzeichnet, dass** ein im Bereich einer Hinterachse angeordneter Querträger (5) den V-förmigen Abschnitt (15) des gabelförmigen Trägers (4) übergreift.

7. Karosserie nach zumindest einem der vorhergehenden Ansprüche, **dadurch gekennzeichnet, dass** die parallelen Streben (11, 12) des gabelförmigen Trägers (4) bis zu einem weiteren Querträger (6) geführt sind.

8. Karosserie nach zumindest einem der vorhergehenden Ansprüche, **dadurch gekennzeichnet, dass** die zwei parallelen Streben (11, 12) und/oder die einzelne Strebe (8) Befestigungsmittel für Sitzschienen und/oder Gurthalterungen für eine zweite und eine dritte Sitzreihe oder hintereinander angeordnete Einzelsitze aufweisen.

## Claims

1. Body for a motor vehicle having several rows of seats arranged one behind the other, with an underbody and with reinforcement parts arranged on the underbody for mounting seats of the motor vehicle and with a longitudinally extending fork-shaped beam (4), wherein the underbody (1) has the fork-shaped beam (4) in its central region, that? the fork-shaped beam (4) is arranged with a single strut (8) orientated in the direction of a rear end of the underbody (1) and with two struts (11,12) directed away from the rear end of the underbody (1), and **characterised in that** the single strut (8) is arranged between a rear wall (7) arranged on the rear end of the body and a crossbeam (5).

2. Body according to claim 1, **characterised in that** the two struts (11, 12) of the fork-shaped beam (4) are arranged parallel to one another and merge into the single strut (8) via a V-shaped section (15).

3. Body according to claim 1 or 2, **characterised in that** the fork-shaped beam (4) is produced in one piece from sheet metal.

4. Body according to at least one of the preceding claims, **characterised in that** the fork-shaped beam (4) has a flange (13, 14) and is fastened to a floor panel of the underbody (1) from the underside.

5. Body according to at least one of the preceding claims, **characterised in that** the fork-shaped beam (4) is fastened to a rear wall (7) of the body.

6. Body according to at least one of the preceding claims, **characterised in that** a crossbeam (5) arranged in the region of a rear axle engages over the V-shaped section (15) of the fork-shaped beam (4).

7. Body according to at least one of the preceding claims, **characterised in that** the parallel struts (11, 12) of the fork-shaped beam (4) extend up to a further crossbeam (6).

8. Body according to at least one of the preceding claims, **characterised in that** the two parallel struts (11, 12) and/or the single strut (8) have fastening elements for seat rails and/or belt mounts for a second and a third row of seats or single seats arranged one behind the other.

## Revendications

1. Carrosserie pour un véhicule automobile présentant plusieurs rangées de siège disposées l'une derrière l'autre, avec un fond inférieur et des parties de renforcement disposés sur le fond inférieur, pour la fixation de sièges du véhicule automobile, et avec une poutre (4) en forme de fourche, s'étendant en direction longitudinale, le fond inférieur (1), présentant dans sa zone centrale la poutre (4) en forme de fourche, de manière que la poutre (4) en forme de fourche soit disposée avec une entretoise isolée (8), tournée en direction d'une extrémité arrière du fond inférieur (1), et avec deux entretoises (11, 12) s'écartant de l'extrémité arrière du fond inférieur (1), et **caractérisée en ce que** l'entretoise isolée (8) est disposée entre une paroi arrière (7), disposée à l'extrémité arrière de la carrosserie, et une poutre transversale (5).

2. Carrosserie selon la revendication 1, **caractérisée en ce que** les deux entretoises (11, 12) de la poutre (4) en forme de fourche sont disposées parallèlement l'une à l'autre et se prolongent, dans l'entretoise isolée (8), par un tronçon (15) en forme de V.

3. Carrosserie selon la revendication 1 ou 2, **caractérisée en ce que** la poutre (4) en forme de fourche est fabriquée d'une seule pièce, en tôle.

4. Carrosserie selon au moins l'une des revendications précédentes, **caractérisée en ce que** la poutre (4) en forme de fourche présente un rebord (13, 14) et est fixée, depuis la face inférieure, sur une tôle de fond du fond inférieur (1).

5. Carrosserie selon au moins l'une des revendications précédentes, **caractérisée en ce que** la poutre (4) en forme de fourche est fixée sur une paroi arrière (7) de la carrosserie.

6. Carrosserie selon au moins l'une des revendications précédentes, **caractérisée en ce qu'**une poutre transversale (5), disposée dans la zone d'un essieu arrière, entoure par-dessous le tronçon (15), en forme de V, de la poutre (4) en forme de fourche.

7. Carrosserie selon au moins l'une des revendications précédentes, **caractérisée en ce que** les entretoises (11, 12) parallèles, de la poutre (4) en forme de fourche, sont guidées jusqu'à une autre poutre transversale (6).

8. Carrosserie selon au moins l'une des revendications précédentes, **caractérisé en ce que** les deux entretoises (11, 12) parallèles et/ou l'entretoise isolée (8), présentent des moyens de fixation pour des glissières de siège et/ou des fixations de ceinture, pour une deuxième et une troisième rangées de sièges, ou bien des sièges individuels disposés les uns derrière les autres.
